Europäisches Patentamt

European Patent Office

Office européen des brevets

(19)

(11) **EP 1 203 270 B1**

(12) **EUROPÄISCHE PATENTSCHRIFT**

| | |
|---|---|
| (45) Veröffentlichungstag und Bekanntmachung des Hinweises auf die Patenterteilung:<br>**23.04.2003 Patentblatt 2003/17** | (51) Int Cl.⁷: **G05D 19/02** |
| (21) Anmeldenummer: **00962221.8** | (86) Internationale Anmeldenummer:<br>**PCT/DE00/02766** |
| (22) Anmeldetag: **16.08.2000** | (87) Internationale Veröffentlichungsnummer:<br>**WO 01/014944 (01.03.2001 Gazette 2001/09)** |

(54) **VERFAHREN UND VORRICHTUNG ZUR DÄMPFUNG VON DREHSCHWINGUNGEN EINER VERBRENNUNGSMASCHINE**

METHOD AND DEVICE FOR REDUCING TORSIONAL VIBRATIONS IN AN INTERNAL COMBUSTION ENGINE

PROCEDE ET DISPOSITIF D'AMORTISSEMENT DE VIBRATIONS TORSIONNELLES D'UN MOTEUR A COMBUSTION INTERNE

| | |
|---|---|
| (84) Benannte Vertragsstaaten:<br>**DE FR IT** | (73) Patentinhaber: **SIEMENS AKTIENGESELLSCHAFT**<br>**80333 München (DE)** |
| (30) Priorität: **19.08.1999 DE 19939250** | (72) Erfinder: **SCHÄFER, Heinz**<br>**97230 Estenfeld (DE)** |
| (43) Veröffentlichungstag der Anmeldung:<br>**08.05.2002 Patentblatt 2002/19** | (56) Entgegenhaltungen:<br>**DE-A- 19 709 134**   **DE-A- 19 721 298**<br>**DE-A- 19 801 542** |

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**EP 1 203 270 B1**

**Beschreibung**

Die Erfindung bezieht sich auf ein Verfahren zur Dämpfung von Drehschwingungen einer Verbrennungsmaschine, bei dem einem von der Verbrennungsmaschine erzeugten Störmoment ein von einem Starter-Generator erzeugtes Gegenmoment überlagert wird. Sie bezieht sich weiter auf eine Vorrichtung zur Durchführung des Verfahrens.

In Kraftfahrzeugen mit Verbrennungsmaschinen, insbesondere mit Kolben-Verbrennungsmotoren, werden infolge des Verbrennungsprozesses in der Maschine bzw. im Motor zusätzlich zu einem mittleren Drehmoment auch Drehmomentungleichförmigkeiten an der Kurbelwelle hervorgerufen. Diese Drehmomentungleichförmigkeiten wiederum rufen Drehzahlungleichförmigkeiten hervor, deren Amplitude im Wesentlichen von der Größe des Schwungrads, d. h. dessen Trägheitsmomentes, abhängig ist. Eine derartige Ungleichförmigkeit der Drehzahl ist dann einer mittleren Drehzahl überlagert. Dies wiederum kann, insbesondere bei Fahrzeugen mit Schaltgetriebe und dabei speziell im niedrigen Drehzahlbereich, ein sogenanntes Getrieberasseln hervorrufen.

Bei einem aus der DE 195 32 163 A1 bekannten System zur aktiven Verringerung von Drehungleichförmigkeiten einer Welle mittels einer entgegenwirkenden Dreh- oder Wanderfeldmaschine wird diese in Abhängigkeit von der jeweiligen Wellenwinkellage als Störgröße auf der Grundlage einer feldorientierten Regelung von zumindest einem Wechselrichter angesteuert. Diese bekannte Lösung geht davon aus, dass die üblicherweise von einer Vielzahl von Parametern abhängige Drehmomentungleichförmigkeit in ihrer Grundstruktur bekannt ist. Die parameter- und insbesondere winkelabhängige Grundstruktur wird als Kennfeld in einem Rechnerspeicher hinterlegt. Zur Gegensteuerung ist jedoch zusätzlich zu möglicherweise bereits vorhandenen Sensoren ein hochauflösender Winkelgeber erforderlich, um anhand der momentanen Winkellage der Kurbelwelle aus dem Kennfeld einen entsprechenden Erwartungswert für das der angetriebenen Welle mittels der Dreh- oder Wanderfeldmaschine aufzuprägende gegenphasige Drehmoment auszulesen. Da jedoch diese Kennfelder nicht im Hinblick auf alle Einflußparameter, wie z. B. in der Praxis auftretende Temperatur- und Alterungseinflüsse, genügend genau beschrieben werden können, ist mittels dieses Systems nur eine unvollständige Kompensation der Ungleichförmigkeiten der Wellendrehzahl erreichbar.

Bei einer aus der DE 198 01 542 A1 bekannten Vorrichtung zur Dämpfung von Drehschwingungen einer Verbrennungsmaschine werden die Drehzahl- oder Drehmomentungleichförmigkeiten als Störgröße aufgefasst. Dazu wird aus der Ist-Drehzahl auf eine Drehmomentungleichförmigkeit geschlossen, die als Steuergröße für einen bereits im Motorsteuergerät vorhandenen Drehzahlregelkreis verwendet wird. Durch eine Vorsteuerung des Drehzahlreglers kann dann eine niederfrequente oder auch eine impulsförmige Störung ausgeregelt werden. Das Motorsteuergerät liefert ausgangsseitig eine Stellgröße, die einer einen Stator-Generator ansteuernden feldorientierten Regelung zugeführt wird. Diese wirkt dann derart auf den als Asynchronmaschine ausgeführten Stator-Generator ein, dass dieser ein den auszuregelnden Drehschwingungen entgegenwirkendes Drehmoment liefert.

Aufgrund der Trägheit des Regelsystems ist diese Vorrichtung jedoch nur für niederfrequente, praktisch zeitinvariante und somit eher quasi statische Störungen geeignet. Höherfrequente und periodische Drehzahl- bzw. Drehmomentungleichförmigkeiten können auch mittels dieser Vorrichtung nur unvollständig kompensiert werden.

Der Erfindung liegt daher die Aufgabe zugrunde, ein Verfahren zur Dämpfung von Drehschwingungen einer Verbrennungsmaschine anzugeben, das eine zuverlässige Dämpfung auch bei Auftreten höherfrequenter und periodischer sowie insbesondere zeitvarianter oder dynamischer Drehzahl- oder Drehmomentungleichförmigkeiten ermöglicht. Darüber hinaus soll eine zur Durchführung des Verfahrens besonderes geeignete Vorrichtung angegeben werden.

Bezüglich des Verfahrens wird diese Aufgabe erfindungsgemäß gelöst durch die Merkmale des Anspruchs 1. Dazu werden die Drehschwingungen nach dem Prinzip der lernenden Störgrößenaufschaltung kompensiert, das z. B. in der von Martin Wolf der technischen Fakultät der Universität Erlangen-Nürnberg vorgelegten und 1997 genehmigten Dissertation mit dem Titel "Eine lernende Störgrößenaufschaltung für Drehstromantriebe mit Pulsumrichter" beschrieben ist.

Bezüglich der Vorrichtung wird die genannte Aufgabe gelöst durch die Merkmale des Anspruchs 5. Zweckmäßige Ausgestaltungen und Weiterbildungen sind Gegenstand der auf diesen rückbezogenen Unteransprüche.

Bei der erfindungsgemäßen Anwendung dieses Prinzips zur aktiven Drehschwingungsdämpfung einer Verbrennungsmaschine oder eines Verbrennungsmotors wird aus einer Ungleichförmigkeit der erfaßten Maschinen- bzw. Motordrehzahl (Ist-Drehzahl) anhand einer zu einer Übertragungsfunktion einer betrachteten Regelstrecke inversen Übertragungsfunktion im Rückkopplungszweig der Regelstrecke eine Störgröße des Drehmomentes abgeleitet und in einem Periodenspeicher hinterlegt. Aus dessen um mindestens eine Störperiode versetzt ausgelesenem Speicherinhalt wird eine Führungsgröße (Soll-Gegenmoment) für eine Regelung des Starter-Generators zur Erzeugung des das Störmoment kompensierenden Gegenmomentes generiert.

Zweckmäßigerweise entspricht die Regelstruktur einer (digitalen) Abtastregelung, da einerseits der Regelalgorithmus aufgrund der Komplexität der Regelstrecke gegenüber einer konventionellen Regelung vereinfacht ist. Andererseits wird in derartigen Verbrennungsmaschinen mittels eines dort üblicherweise eingesetzten Kurbelwellensensor in Form eines sogenannten Inkremental- oder Impulsgebers die Ist-Drehzahl der Kurbelwelle und damit die Motordrehzahl bereits in diskreten Abtastwerten erfaßt. Anhand einer Abweichung der zwischen den Abtastwert oder Abtastimpulsen liegenden Abtastzeit bei der Ist-Drehzahlvon der Abtastzeit bei einer in der Regel von der Soll-Drehzahl bestimmten konstanten oder mittleren Drehzahl werden mittels der zur Übertragungsfunktion der Regelstrecke inversen Übertragungsfunktion aus einer Drehzahlungleichförmigkeit diskrete Störgrößenwerte einer Störperiode der entsprechenden Drehmomentungleichförmigkeit ermittelt. Diese diskreten Störgrößenwerte werden im Periodenspeicher den dort bereits abgelegten Störgrößenwerten einer früheren Störperiode hinzuaddiert. Gleichzeitig werden die mit den aktuellen Störgrößenwerten aufsummierten Störgrößenwerte der früheren Störperiode einer feldorientierten Regelung des Starter-Generators als Soll-Gegenmoment zugeführt.

Die betrachtete Regelstrecke, die im Leerlauf, d. h. im ausgekoppelten Zustand des Verbrennungsmotors, erkanntermaßen dem Trägheitsmoment des Verbrennungsmotors und dem diesem auf der Kurbelwelle eines Kraftfahrzeugs nachgeordneten Starter-Generator in Form einer Drehstrom- oder Asynchronmaschine entspricht, kann durch ein Integrierglied (I-Glied) approximiert werden, dessen Übertragungsfunktion somit bekannt ist. Die inverse Übertragungsfunktion repräsentiert dann ein Differenzierglied (D-Glied), das im Rückkopplungszweig der Abtastregelung dem Periodenspeicher vorgeordnet ist. Dieser wiederum hat die Charakteristik eines Summierers, der ein um die Störperiode verzögertes Kompensationssignal, das sich aus Störgrößenwerten einer vorhergehenden Störperiode zusammensetzt, zum aus den aktuellen Störgrößenwerten gebildeten Störsignal winkelgetreu addiert. Dabei entspricht der Abtastwinkel bei einer 360°-Drehung, d.h. einer einzelnen vollständigen Kurbelwellenumdrehung $2\pi/n$, wenn n die Anzahl der Abtast- oder Impulswerte ist.

Die mittels der inversen Übertragungsfunktion des Regelalgorithmus aus Drehzahlungleichförmigkeiten ermittelten, an sich nicht meßbaren Drehmomentungleichförmigkeiten werden somit aktiv gedämpft, wobei die Dämpfung die Charakteristik eines Verzögerungsgliedes erste Ordnung hat. Dabei werden auch höherfrequente und insbesondere periodische, zeitvariante Störungen, insbesondere ab bereits 1Hz, ausgeregelt und somit gedämpft.

Da die Störung einer mittleren Drehzahl überlagert ist und sich somit im zeitlichen Abstand zwischen den erfassten Abtastwerten einer Periode der Ist-Drehzahl wiederspiegelt, können die diskreten Störgrößenwerte und damit der Störsignalverlauf aus einer mit der Drehzahlungleichförmigkeit verbundenen Abweichung der Abtastzeitintervalle von einem beim ungestörten Drehzahlmittelwert gegebenen Abtastzeitintervall abgeleitet werden. Dabei ist die Störperiode aufgrund eines entsprechenden Markierers des Kurbelwellensensors am Anfang und am Ende eines einer Periode entsprechenden Wellenumlaufs stets exakt definiert. Im Periodenspeicher wird der hinterlegte Schätz- oder Störsignalverlauf durch Summenbildung der Störgrößenwerte nachfolgender Stör- oder Störsignalperioden solange verändert, bis das vom Periodenspeicher generierte Summen- oder Kompensationssignal, das über die Regelung des Starter-Generators dem System an der Eingriffsstelle der Störung als Gegenmoment aufgeschaltet wird, dem zu diesem gegensinnigen oder gegenphasigen periodischen Störmoment gleich ist.

Dabei wird das Summen- oder Kompensationssignal, das das vom Starter-Generator aufzubringende Soll-Gegenmoment repräsentiert, vorzugsweise mit einem Faktor gewichtet, der kleiner als Eins ist. Dadurch wird erreicht, dass die Auswirkung der Störung, d. h. die Drehzahl- oder Drehmomentungleichförmigkeit pro Störperiode jeweils nur zu einem Bruchteil vermindert wird. Dies wiederum führt dazu, dass die Auswirkung der Störung - beispielsweise gemäß einem Verzögerungsglied erster Ordnung- relativ langsam abklingt. Dem Starter-Generator wird somit ein entsprechend abgeschwächtes Kompensationssignal als Soll-Gegenmoment zugeführt. Der feldorientiert geregelte Starter-Generator prägt dann im Millisekundenbereich das geforderte Gegendrehmoment oder Gegenmoment der Kurbelwelle und damit dem System, d. h. der Verbrennungsmaschine auf.

Dabei wird ein Lerneffekt dadurch erzielt, dass bei jeder auf eine Störperiode folgenden Störperiode einerseits ein neuer Wert des Summen- oder Kompensationssignals aus dem Periodenspeicher dem Starter-Generator als Soll-Gegenmoment zugeführt wird, und dass andererseits aktuelle Störgrößenwerte erzeugt und den im Periodenspeicher hinterlegten Störgrößenwerten überlagert werden. Dadurch wird nach mehreren Perioden die periodische Drehschwingung praktisch vollständig zurückgeregelt.

Die mit der Erfindung erzielten Vorteile bestehen insbesondere darin, dass durch Bereitstellen einer einem bestimmten Störsignalverlauf mit zunächst festliegender Periode besonders gut angepaßte und diese hochdynamisch kompensierende Stellgröße in Form eines ein Soll-Gegenmoment repräsentierenden Kompensatonssignals eine zuverlässige und schnelle Dämpfung von Drehmomentungleichförmigkeiten einer Verbrennungsmaschine erreicht wird, so dass auch höherfrequente, zeitvariante Drehschwingungs-Störungen zuverlässig ausgeregelt werden. Die hierzu erforderliche Erfassung der Periode des Störsignalverlaufs kann durch eine Auswertung eines die Ist- oder Motordrehzahl repräsentierenden Referenzsignals eines üblicherweise bei einer Verbrennungsmaschine in einem Kraftfahrzeug bereits vorhandenen Kurbelwellensensors erfolgen, so dass kein zusätzliches Erfassungssystem erforderlich ist.

Durch die Einbindung der selbstlernenden Störgrößenaufschaltung in die Regelung oder den entsprechenden Regelalgorithmus wird eine besonders hohe Wirksamkeit des daraus abgeleiteten Soll-Drehmoments oder Steuersignals für die Dämpfungsregelung erreicht, da die in zurückliegenden oder vergangenen Perioden des Störsignals enthaltenen Informationen gespeichert sind und zur Kompensation der Drehschwingungs-Störungen herangezogen werden. Durch die Einbindung dieses Lernprozesses in die als Kompromiß zwischen hoher Regeldynamik und tolerierbarer Regelabweichung ausgelegte Dämpfungsregelung wird in einfacher Art und Weise die gewünschte Verbesserung der Drehschwingungsdämpfung erzielt.

Nachfolgend werden Ausführungsbeispiele der Erfindung anhand einer Zeichnung näher erläutert. Darin zeigen:

FIG 1   schematisch den Antriebsstrang einer drehzahlgeregelten Verbrennungsmaschine mit einem Starter-Generator zur aktiven Schwingungsdämpfung,

FIG 2   ein Regelstrukturbild der aktiven Schwingungsdämpfung,

FIG 3   in einer Diagramm-Darstellung die Funktionsweise der aktiven Schwingungsdämpfung, und

FIG 4   eine vereinfachte Regelstruktur für Drehschwingungen (Störmomente) größer 1Hz.

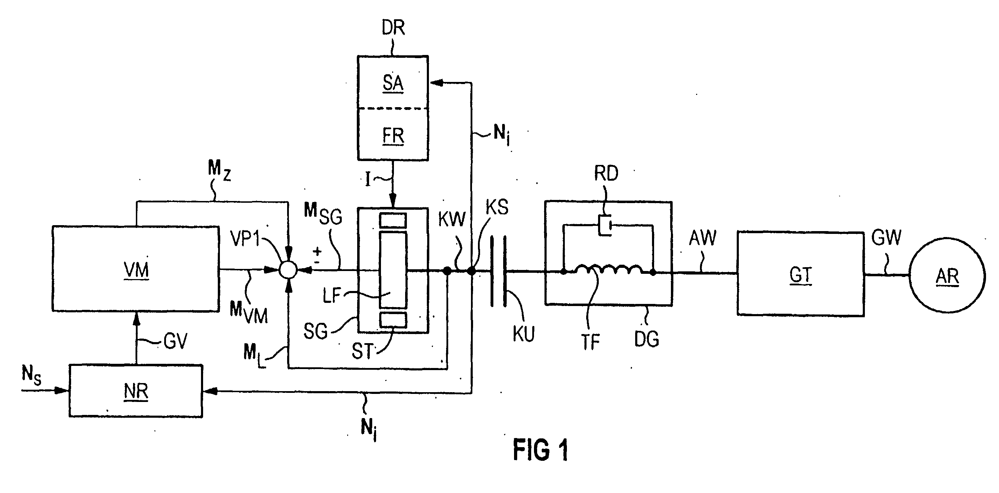

FIG 1 zeigt die mechanische Antriebsstruktur eines Kraftfahrzeugs. mit einer Verbrennungsmaschine oder einem Verbrennungsmotor VM und mit einem Starter-Generator SG in Form einer Drehstrommaschine, deren Rotor oder Läufer LF auf der angetriebenen Kurbelwelle KW sitzt und deren Stator ST ortsfest angeordnet ist. Der auch als Schwungrad dienende Rotor kann als Kurzschlussläufer LF oder auch mit ausgeprägten Magnetpolen ausgebildet sein. Entlang des schematisch dargestellten Antriebsstrangs des Verbrennungsmotors VM hinter einer Kupplung KU ist ein durch einen Reibungsdämpfer RD und einen Torsionsfederdämpfer TF gebildetes passives Dämpfungsglied DG auf einer Antriebswelle AW angeordnet, die wiederum in ein Getriebe GT führt. Abtriebsseitig ist das Getriebe GT über eine Gelenkwelle GW mit Antriebsrädern AR des Kraftfahrzeugs gekoppelt.

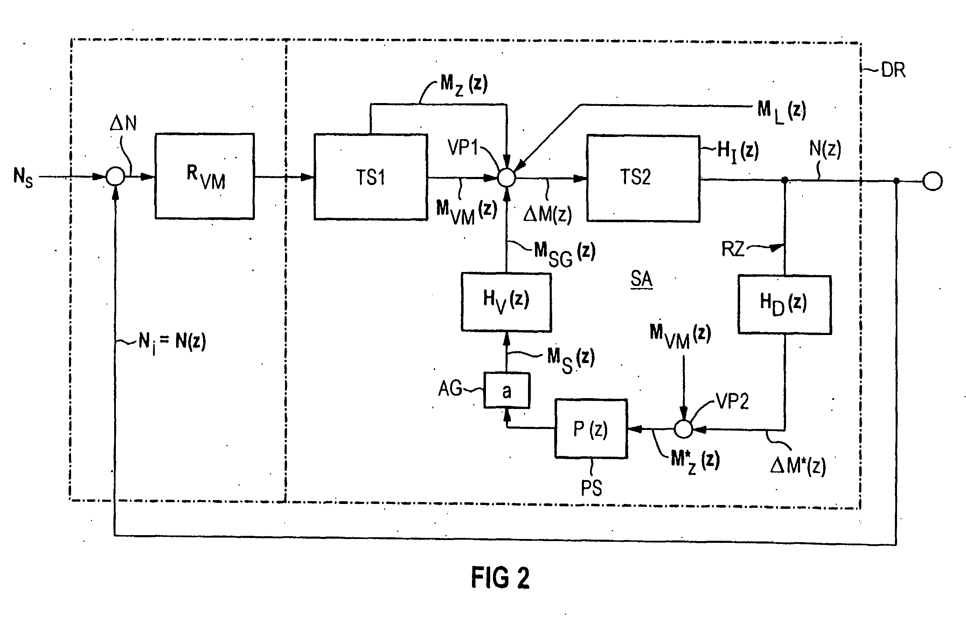

Der Verbrennungsmotor VM wird über einen Drehzahlregler NR mit einem bestimmten Gemischvolumen GV im Sinne einer Soll-Drehzahl $N_s$ angesteuert. Das vom Verbrennungsmotor VM erzeugte innere Drehmoment $M_{VM}$ führt zu einer der Motordrehzahl entsprechenden Ist-Drehzahl $N_i$ der Kurbelwelle KW. Diese mittels eines Kurbelwellensensors KS erfasste Ist-Drehzahl $N_i$ wird einerseits dem Drehzahlregler NR und andererseits einer nachfolgend auch als Dämpfungsregelung DR bezeichneten Regelung des Starter-Generators SG zugeführt. Diese umfaßt eine nach dem Prinzip der lernende Störgrößenaufschaltung arbeitende Regelung SA, die einer feldorientierten Regelung FR des Starter-Generators SG einen Momentenbedarf oder ein Soll-Gegendrehmoment $M_s$ (FIG 2) zur Kompensation von Drehmomentungleichförmigkeiten oder Störmomenten $M_z$ vorgibt. Die Funktionsweise der feldorientierten Regelung.ist z. B. in der DE 198 01 542 A1 beschrieben.

Der in an sich bekannter Weise einerseits als Anlasser für den Verbrennungsmotor VM dienende und andererseits bei laufendem Verbrennungsmotor VM als von diesem angetriebener Generator arbeitende Starter-Generator SG wird daher zusätzlich zur Dämpfung unerwünschter Drehschwingungen, insbesondere im Leerlaufbetrieb oder bei einem Lastwechsel, eingesetzt. Dazu wird ein entsprechender Strom I von der feldorientierten Regelung FR auf den Starter-Generator SG gegeben. Davon abhängig erzeugt der Starter-Generator SG ein Gegenmoment oder Gegendrehmoment $M_{SG,}$ das der Kurbelwelle KW aufgeprägt wird und dabei dem inneren Drehmoment $M_{VM}$ des Verbrennungsmotors VM je nach Richtung der Drehmomentungleichförmigkeit oder der Drehschwingungs-Störung betriebsabhängig gleich- oder entgegengerichtet ist.

In der Funktion als aktiver Schwingungsdämpfer wirkt das vom Starter-Generator SG erzeugte Drehmoment $M_{SG}$ stets als Gegenmoment zu dem die unerwünschten Drehschwingungen hervorrufenden Störmoment $M_z$, das - wie durch den Vergleichspunkt VP1 zwischen dem Verbrennungsmotor VM und dem Starter-Generator SG angedeutet - ebenfalls auf die Kurbelwelle KW wirkt. Diese infolge des Verbrennungsprozesses im Verbrennungsmotor VM zusätzlich zum inneren oder mittleren Drehmoment $M_{VM}$ an der Kurbelwelle KW hervorgerufenen Drehmomentungleichförmigkeiten rufen wiederum Drehzahlungleichförmigkeiten hervor, deren Amplitude im Wesentlichen von der Größe des vom Rotor oder Läufer LF gebildeten Schwungrades, d.h. dessen Trägheitsmomentes abhängig ist. Diese Drehzahlungleichförmigkeit ist dann einer mittleren Drehzahl der Kurbelwelle KW überlagert und als Information in der erfassten Ist-Drehzahl $N_i$ enthalten.

Soll nun eine bestimmte Soll- oder Leerlauf-Drehzahl $N_s$ der Kurbelwelle KW und damit des Verbrennungsmotors VM eingehalten werden, so wird diese Soll-Drehzahl $N_s$ mit der mittels des Kurbelwellensensors KS erfassten Ist-Drehzahl $N_i$ verglichen und die Differenz oder Regelabweichung $\Delta N$ (FIG 2) wird in den Drehzahlregler NR eingespeist. Der Reglerausgang des Drehzahlreglers NR stellt dann einen Momentenbedarf dar, der im Verbrennungsmotor VM eine Änderung der Drosselklappenstellung und/oder des Zündwinkels hervorruft. Diese Änderung liefert dann nach einer von verschiedenen Parametern abhängigen Zeitverzögerung, die in der Größenordnung von z. B. etwa 300 ms liegt, eine Änderung des mittleren Drehmomentes $M_{VM}$, die überlagert ist durch eine systembedingte Drehmoment-Ungleichförmigkeit in Form des Störmomentes $M_z$. Diese wiederum wird hervorgerufen durch Kompressions- und Dekompressionsvorgänge im Verbrennungsmotor VM, wobei deren Amplitude im Wesentlichen durch die Anzahl der Zylinder des Verbrennungsmotors VM bestimmt ist.

Zusätzlich zum Störmoment $M_z$ und zum inneren oder mittleren Drehmoment $M_{VM}$ greift an der Kurbelwelle KW an der durch den Vergleichspunkt VP1 veranschaulichten Eingriffsstelle ein äußeres Störmoment oder Lastmoment $M_L$ an. Im Leerlauf der Verbrennungsmaschine, d.h. wenn kein Gang eingelegt ist, wird dieses Lastmoment $M_L$ nur von Hilfsaggregaten der Verbrennungsmaschine erzeugt. Ein aus dem inneren Drehmoment $M_{VM}$ und aus dem Störmoment $M_z$ sowie aus dem Lastmoment $M_L$ und aus dem Drehmoment $M_{SG}$ des Starter-Generators SG gebildetes Summenmoment $\Delta M$ (FIG 2) wirkt dann auf einen nachfolgend als Teilregelstrecke TS2 bezeichneten Antriebsbschnitt ein, der im Leerlauf im Wesentlichen aus den Trägheitsmomenten des Verbrennungsmotors VM und des Starter-Generators SG gebildet ist. Der Verbrennungsmotor VM selbst bildet dann im in FIG 2 dargestellten Regelstrukturbild eine Teilregelstrecke TS1. Im eingekoppelten Zustand wird zusätzlich das auf die Kurbelwelle KW reduzierte Trägheitsmoment des Fahrzeugs berücksichtigt, indem dieses zu dem genannten Trägheitsmoment hinzuaddiert wird.

Die durch das Störmoment $M_z$ und durch das ebenfalls als Störmoment anzusehende Lastmoment $M_L$ hervorgerufenen Drehzahlungleichförmigkeiten sind mit einem Drehzahlgeber erfassbar. Aufgrund des relativ stark verzögerten Momentenaufbaus im Verbrennungsmotor VM gelingt es mit Hilfe des inneren Drehmomentes oder Motormomerites $M_{VM}$ nicht, höherfrequente Störmomente $M_z$ zu dämpfen oder zu kompensieren, da die vorhandene Drehzahlregelung NR des Verbrennungsmotors VM nur relativ niederfrequente Drehzahlschwankungen oder -schwingungen ausregeln kann. Daher werden die Störmomente $M_z$, $M_L$ mittels eines vom Starter-Generator SG erzeugten entsprechenden Gegenmomentes $M_{SG}$ bedämpft oder kompensiert. Der Regelalgorithmus des entsprechenden Regelverfahrens ist in FIG 2 anhand eines Regelstrukturbildes veranschaulicht.

Das in FIG 2 veranschaulichte Regelverfahren eignet sich besonders zur Bedampfung von periodischen Störmomenten $M_z$, $M_L$ mit unbekanntem Signalverlauf, wie diese im Verbrennungsmotor VM eines Kraftfahrzeuges üblicherweise vorkommen. Die durch den Verbrennungsmotor VM repräsentierte Teilregelstrecke TS1 einerseits und die die Trägheitsmomente des Verbrennungsmotors VM und des Starter-Generators SG im Leerlauf repräsentierende Teilregelstrecke TS2 andererseits sind im Regelalgorithmus als voneinander separate Regelstreckenabschnitte aufgefasst und daher im Regelstrukturbild auch getrennt dargestellt. Der zwischen diesen beiden Teilregelstrecken TS1 und TS2 liegende Vergleichspunkt VP1 repräsentiert die Eingriffsstelle des vom Starter-Generator SG erzeugten Gegenmomentes. $M_{SG}$, so dass regelungstechnisch eine den Starter-Generator SG mit feldorientierter Regelung FR beschreibende Übertragungsfunktion $H_V(z)$ im Rückkopplungszweig RZ der Dämpfungsregelung DR liegt.

Da die Teilregelstrecke TS2 das Trägheitsmoment des Verbrennungsmotors VM und des Starter-Generators SG im Leerlauf darstellt, kann diese als Integrator beschrieben werden. Die z-Übertragungsfunktion für ein Integrierglied lässt sich aus der allgemeinen Rechenoperation für die sogenannte z-Transformation ableiten, so dass

$$H_I(z) = \frac{N(z)}{\Delta M(z)} = \frac{z}{z-1} \qquad\qquad (1)$$

die z-Übertragungsfunktion der Teilregelstrecke TS2 ist. Dabei ist der Zusammenhang zwischen der erfassten Ist-Drehzahl $N_i = N(z)$ und dem Summendrehmoment $\Delta M$, das sich insbesondere aus dem inneren Drehmoment $M_{VM}$ und dem Störmoment $M_z$ zusammensetzt, gegeben durch die Beziehung

$$M = J \cdot \frac{d\bar{\omega}}{dt} = J \cdot \frac{2\pi}{60} \cdot \frac{dN}{dt} \qquad\qquad (2),$$

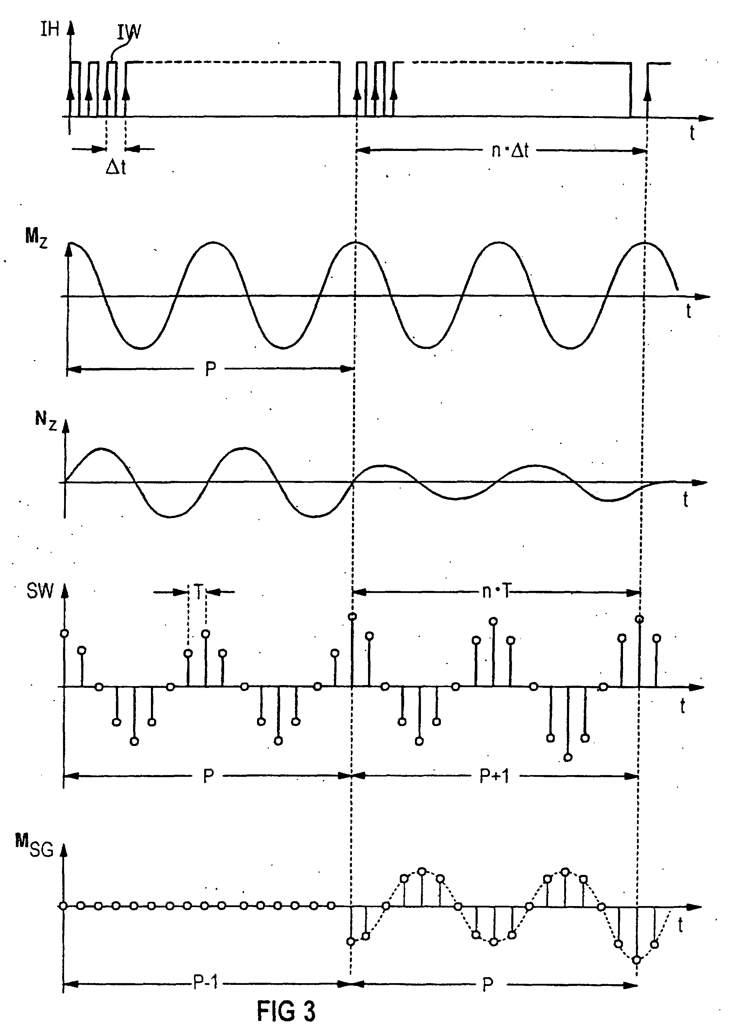

wobei J das Trägheitsmoment des Verbrennungsmotors VM und des Starter-Generators SG im Leerlauf, $\omega$ die Kur-belwellendrehzahl und n die Anzahl der mittels des Kurbelwellensensors KS erfassten Abtastwerte pro Kurbelwellenumdrehung ist. Bei einer Abtastrate von z.B. n = 60 pro 360°-Umdrehung ergibt sich somit je Abtastintervall oder Abtastzeitpunkt $n \cdot \Delta t$ ein Drehwinkel von 6°, wobei $\Delta t$ die Abtastzeit ist. Die sich daraus ergebende Impulsfolge der vom Kurbelwellensensor KS in diskreten Impulswerten IW erfaßten Ist-Drehzahl $N_i = N(z)$ ist im oberen Diagramm der FIG 3 veranschaulicht.

Die z-Transformation ergibt sich dabei aus der allgemeinen Rechenvorschrift

$$Y(z) = T \sum_{k=0}^{\infty} Y(k) \cdot z^{-k} \qquad\qquad (3),$$

wobei $T = \Delta t$ die Abtast- oder Impulsabstandszeit und $y(k) = y(k \cdot T)$ der Ausgangswert und damit der Abtastwert zum jeweiligen Abtastzeitpunkt $k = k \cdot T$ ist. Bei n Abtastwerten läuft diese Summe dann von k = 0 bis k = n. y(z) ist somit die z-Transformierte der Ausgangs-Zeitfunktion y(t). Die z-Übertragungsfunktion $H_I(z)$ für die zumindest näherungsweise durch ein Integrierglied beschreibbare Teilregelstrecke TS2 ergibt sich somit aus

$$\Delta M(z)=\Delta M(z)\cdot z^{-1}+N(z) \qquad (4),$$

was der z-Transformation der zeitdiskreten Beziehung

$$\Delta M(k)=\Delta M(k-1)+N(k) \qquad (5)$$

entspricht. Dabei stellt der Operator $z^{-1}$ die digitale Verzögerung um ein Taktsignal dar.

Die Ausgangsgröße N(z) der Teilregelstrecke TS2 bildet die Eingangsgröße einer zur z-Übertragungsfunktion $H_I(z)$ inversen Übertragungsfunktion $H_D(z)$ im Rückkoppelungszweig RZ der lernenden Störgrößenaufschaltung SA und damit der Dämpfungsregelung DR. Für diese inverse Übertragungsfunktion $H_D(z)$ gilt somit

$$H_D(z)=H_I^{-1}(z)=\left(\frac{z}{z-1}\right)^{-1}=\frac{z-1}{z} \qquad (6),$$

Dies entspricht der z-Übertragungsfunktion für ein Differenzierglied, da mit

$$N(k)=\Delta M(k)-N(k-1) \qquad (7)$$

über die z-Transformation gilt:

$$N(z)=\Delta M^*(z)-\Delta M^*(z)\cdot z^{-1} \qquad (8)$$

$$\frac{\Delta M^*(z)}{N(z)}=\frac{z-1}{z}=H_D(z)=H_I^{-1}(z) \qquad (9).$$

Dabei stellt $\Delta M^*(z)$ zunächst ein berechnetes und daher quasi geschätztes Summendrehmoment dar, das eine mittels des Regelalgorithmus aus der Drehzahl N(z) abgeleitete Drehmoment-Störgröße $M_z^*(z)$ enthält. Diese sich dann durch Subtraktion des inneren Drehmomentes $M_{VM}(z)$ vom Summendrehmoment $\Delta M^*(z)$ im Vergleichspunkt VP2 des Rückkopplungszweiges RZ ergebende Drehmoment-Störgröße $M_z^*(z)$ repräsentiert somit eine mittels des Regelalgorithmus aus einer Ungleichförmigkeit der Ist-Drehzahl $N_i = N(z)$ ermittelte Drehmomentungleichförmigkeit. Die nachfolgend auch als berechnetes Störmoment $M_z^*(z)$ bezeichnete, quasi zunächst geschätzte Drehmoment-Störgröße $M_z^*(z)$ liegt entsprechend der jeweiligen Störperiode P mit $P=n\cdot T$ abgetasteten Störgrößenwerten SW vor. Dies ist in FIG 3 veranschaulicht.

FIG 3 zeigt dabei in einem oberen Impulsdiagramm, bei dem auf der Abzisse die Zeit t aufgetragenen ist, die $n\cdot\Delta t$ Abtast- oder Impulswerte IW des Kurbelwellensensors KS mit der auf der Ordinate abgetragenen Impulshöhe IH. Die Anzahl der Abtastwerte je 360°-Umdrehung der Kurbelwelle KW und damit die Anzahl von Impulswerten IW je Periode P beträgt beispielsweise n = 60, wobei ein entsprechender Markierer in Form einer Impulslücke des als Impulsgenerator ausgeführten Kurbelwellensensors KS den Anfang und das Ende einer Periode P festlegt.

Die infolge von Drehschwingungen verursachten Drehzahlungleichförmigkeiten spiegeln sich in einer Abweichung der Taktgeschwindigkeit von einem Mittelwert wieder. D.h., dass bei einer über der Soll-Drehzahl $N_s$ oder über einer mittleren Kurbelwellendrehzahl liegenden Ist-Drehzahl N(z) der zeitliche Abstand $\Delta t$ zwischen zwei Impuls- oder Abtastwerten IW(n) und IW(n+1) kleiner ist als der zeitliche Abstand $\Delta t$ bei der Soll-Drehzahl $N_s$. Ist dagegen die Ist-Drehzahl $N_i$ kleiner als die Soll-Drehzahl $N_s$ oder die mittlere Kurbelwellendrehzahl, so. ist der Zeitabstand $\Delta t$ zwischen den Abtastwerte IW(n) und IW(n+1) größer als der zeitliche Abstand $\Delta t$ bei der Soll-Drehzahl $N_s$ bzw. bei der mittleren Kurbelwellendrehzahl.

Das in FIG 3 zweite Diagramm von oben stellt den Verlauf des Störmomentes $M_z$ über der Zeit t dar, während das in FIG 3 mittlere Diagramm den sich aus der Integration des Störmomentes $M_z$ ergebenden und demgegenüber um 90° phasenverschobenen Drehzahlverlauf $N_i = N(z)$ über der Zeit t zeigt. Bei diesen Darstellungen gemäß der FIG 3 ist der Einfachheit halber vorausgesetzt, dass zunächst keine ein Lastmoment $M_L$ hervorrufende Laststörungen vorliegen, und dass der Mittelwert des inneren Drehmoments $N_{VM}$ des Verbrennungsmotors VM gleich null ist.

Mit dem vorhandenen Kurbelwellensensor KS können sowohl die Auswirkungen des Störmomentes $M_z$ infolge von Drehzahlungleichförmigkeiten als auch die Störperiode P des Störmomentverlaufes nachgewiesen werden. Im eingeschwungenen Zustand des betrachteten Systems wird eine Störperiode P für die Abtastung der Drehzahlungleichförmigkeit $N_z$ mit der steigenden Flanke der Referenzmarke im Kurbelwellensensor KS gestartet und mit der abfallenden Flanke der Referenzmarke im Kurbelwellensensor KS beendet. Da die Übertragungsfunktion $H_I(z)$ der Teilregelstrecke TS2 bekannt ist, kann durch die inverse Übertragungsfunktion $H_D(z)$ der Teilregelstrecke TS2 aus der Drehzahlungleichförmigkeit $N_z$ über die oben genannte Beziehung (2) zwischen dem Drehmoment M und der Drehzahl N auf die messtechnisch nicht zugängliche Drehmomentwelligkeit oder - ungleichförmigkeit $M_z$ geschlossen werden. Aus der sich in der Abweichung des Zeitabstands $\Delta t$ der diskreten Impulswerte IW bei der Ist-Drehzahl $N_i = N(z)$ gegenüber dem Zeitabstand $\Delta t$ bei der Soll-Drehzahl $N_s$ wiederspiegelnden Drehzahlungleichförmigkeit werden die diskreten Störgrößenwerte SW der Drehmomentungleichförmigkeit $M_z$ ermittelt.

Dabei werden die diskreten Störgrößenwerte SW mit der Taktzeit T als zeitlich äquidistant innerhalb einer Periode P angesehen, auch wenn die Zeitabstände $\Delta t$ zwischen den diskreten Impulswerten IW vom durch die Soll-Drehzahl $N_s$ bestimmten Mittelwert abweichen. Da keine sprunghaften und großen Abweichungen zu erwarten sind, geht die z-Transformation nach der in (3) angegebenen Beziehung von einer konstanten Abtastzeit T inerhalb einer Periode P aus. Diese im in FIG 3 zweiten Diagramm von unten veranschaulichten diskreten Störgrößenwerte SW werden winkel- oder phasengetreu für eine Periode P in einem im Rückkopplungszweig RZ vorgesehen Periodenspeicher PS der lernenden Störgrößenaufschaltung SA der Dämpfungsregelung DR zu gegebenenfalls dort bereits vorhandenen Störgrößenwerten SW einer früheren Periode P-1 hinzuaddiert. Außerdem werden neue Störgrößenwerte SW für die folgende Periode P+1 gebildet.

Gleichzeitig mit der Bildung der neuen Störgrößenwerte SW werden die alten Störgrößenwerte SW des Periodenspeichers PS mittels eines diesem im Rückkopplungszweig RZ nachgeordneten Abschwächungsglied AG, vorzugsweise durch Wichtung mit einem Faktor a, mit $1 < a < 0$, abgeschwächt und als Führungsgröße oder Soll-Gegenmoment $M_s(z)$ an die feldorientierte Regelung FR des Starter-Generators SG weitergegeben. Der somit hochdynamisch geregelte Starter-Generator SG kann dann im Millisekundenbereich die geforderten Gegendrehmomente $M_{SG}$ (z) aufbauen und der Kurbelwelle KW an der durch den Vergleichspunkt VP1 repräsentierten Eingriffsstelle einprägen. Dieser Versatz des Aufbaus des Soll-Gegenmomentes $M_{SG}(z)$ um eine Störperiode P ist in dem in FIG 3 unteren Diagramm veranschaulicht.

Gemäß dem Prinzip der lernenden Störgrößenaufschaltung weist der Periodenspeicher PS einen integrierenden Charakter auf, in dem der jeweils in Form der diskreten Störgrößenwerte SW abgespeicherte Verlauf des mittels des Regelalgorithmus berechneten Störmomentes $M^*_z(z)$ so lange verändert wird, bis das tatsächliche Störmoment $M_z$ und das aufgeschaltete Gegenmoment $M_{SG}$ gleich sind. Da die Auf Schaltung dieses Gegenmomentes $M_{SG}$ über den Periodenspeicher PS um den Faktor a abgeschwächt erfolgt, wird die Auswirkung der Störperiode P jeweils nur um einen Bruchteil vermindert. Auf diese Weise wird bei einem periodischen Störmoment $M_z$ jeder zu einem bestimmten Phasenwinkel gehörende Störgrößenwert SW auf einem Speicherplatz des Periodenspeichers PS angenähert, so dass die sich in einer Drehschwingung äußernde Auswirkung des Störmoments $M_z$ und damit der Störung gemäß einem Verzögerungsglied erster Ordnung abklingt.

Da der Periodenspeicher PS integrierenden Charakter aufweist, ist der Endzustand dann erreicht, wenn seine Eingangsgröße, d. h. das mittels des Regelalgorithmus berechnete Störmoment und damit die mittels dieses ermittelte Drehmoment-Störgröße $M^*_z(z)$ nicht mehr vorhanden ist oder unterhalb einer vorgebbaren Schranke liegt. Bei bekannter Periodendauer P kann die lernende Störgrößenaufschaltung SA im Laufe mehrerer Störperioden P das Stellsignal oder Gegenmoment $M_{SG}$ für das Gesamtsystem allmählich vervollständigen und verbessern, bis eine vorgebbare Genauigkeitsanforderung erfüllt ist.

Dazu liest der Periodenspeicher PS in jedem Abtastzeitpunkt $k \cdot T$, mit k = 1,2,...n, den Störgrößenwert SW eines Speicherplatzes aus und übergibt diesen in Form eines entsprechenden Wertes des Soll-Gegenmoments $M_s(z)$ der feldorientierten Regelung FR des-Starter-Generators SG, der diesen Wert des Soll-Gegenmomentes $M_s(z)$ wiederum in Form eines entsprechenden Wertes des Gegenmomentes $M_{SG}$ auf die Kurbelwelle KW aufschaltet. Anschließend wird im entsprechenden Speicherplatz des Periodenspeichers PS zu diesem Störgrößenwert SW der momentane Störgrößenwert SW des dem Periodenspeicher PS eingangsseitig zugeführten, berechneten Störmomentes $M^*_z(z)$ hinzuaddiert und abgespeichert. Mit jedem der folgenden Speicherplätze wird mit fortschreitendem Abtastzyklus $k \cdot T$ in gleicher Weise verfahren, bis nach k = n Zeitschritten einer Störperiode P wieder der erste Speicherplatz bearbeitet wird.

In diesem Fall kann der Periodenspeicher PS in allgemeiner Form durch einen Summierer beschrieben werden, der eine um die Störperiode $P = n \cdot T$ versetzte Störgröße $M_z^*(z)$ - und damit ein entsprechend verzögertes Störmomentsignal - durch Summenbildung der entsprechenden Störgrößenwerte SW zur aktuellen Störgröße $M_z^*(z)$ - und damit zum aktuellen Störmomentsignal - hinzuaddiert. Dabei ist k mit k = 1,2, ...n die Nummer des jeweiligen Abtastzeitpunktes. Da der Periodenspeicher PS als Summierer arbeitet, kann dieser ausgehend von der Differenzengleichung

$$a \cdot M_Z^*(k) = M_S(k) \cdot (k+n) - M_S(k) \tag{10}$$

beschrieben werden durch die z-Übertragungsfunktion

$$P(z)=\frac{M_s(z)}{M_z^*(z)}=a\cdot\frac{1}{z^n - 1} \tag{11},$$

wobei die Ausgangsvariable $M_s(z)$ das Soll-Gegenmoment für den Starter-Generator SG und die Eingangsvariable $M_z^*(z)$ das berechnete Störmoment und damit die Drehmoment-Störgröße ist, und wobei a der Abschwächungsfaktor und $z^n$ ein Verzögerungsglied für die Störperiode P = n·T, d. h. ein die Anzahl der Verzögerungen beschreibender Operator ist.

Innerhalb der in FIG 2 dargestellten Regelstruktur kann der als Asynchronmaschine mit feldorientierter Regelung FR ausgeführter Starter-Generator SG näherungsweise durch ein Verzögerungsglied erster Ordnung (PT1-Glied) beschrieben werden. Die z-Übertragungsfunktion $H_V(z)$ einer Asynchronmaschine mit feldorientierte Regelung FR und damit des Starter-Generators SG ist mit

$$M_s(z)-c\cdot M_s(z)\cdot z^{-1} = b\cdot M_{SG}(z) \tag{12}.$$

beschreibbar durch

$$\frac{M_{SG}(z)}{M_s(z)}=b\cdot\frac{z}{z + c}=H_V(z) \tag{13},$$

wobei b und c, mit -1 < c < 0, Parameter der Asynchronmaschine und damit des Starter-Generators SG sind.

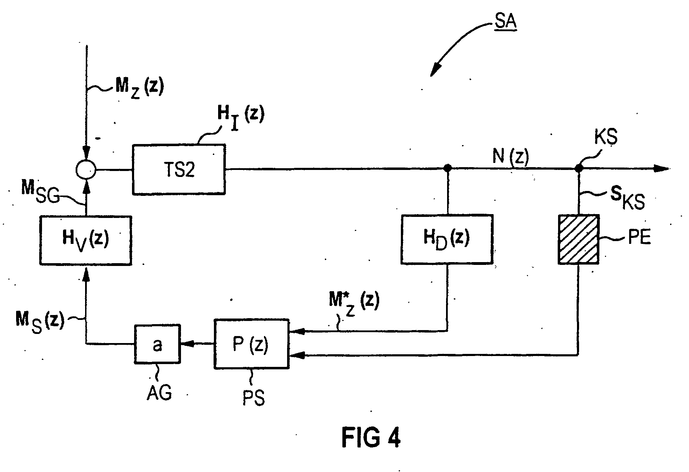

Der Verbrennungsmotor VM ist üblicherweise nicht in der Lage, schnelle Drehmoment- bzw. Drehzahlungleichförmigkeiten durch ein gegenphasiges inneres Motordrehmoment $M_{VM}$ zu kompensieren oder auszuregeln. Mit diesem inneren Drehmoment $M_{VM}$ können daher nur quasi statische oder sehr niederfrequente Störmomente $M_z$ im Leerlauf des Verbrennungsmotors VM ausgeregelt werden. Für höherfrequente Störmomente $M_z$ mit einer Frequenz ab etwa 1Hz kann daher das innere Drehmoment $M_{VM}$ des Verbrennungsmotors VM als konstant und damit innerhalb des Regelalgorithmus mit $M_{VM},(z) = O$ angesetzt werden. Damit vereinfacht sich die in FIG 2 dargestellte Regelstruktur zu der in FIG 4 dargestellten Regelstruktur für die lernende Störgrößenaufschaltung SA und damit für die Starter-Generator- oder Dämpfungs-Regelung DR zur Drehschwingungsdämpfung.

In die in FIG 4 dargestellte vereinfachte Regelstruktur ist zusätzlich eine Periodenerkennung PE eingefügt, die die in Form einer Impulslücke ausgeführte Referenzmarke des nach Art eines Impulsgenerators arbeitenden Kurbelwellensensors KS auswertet. Die Periodenerkennung PE ermittelt somit aus dem die Ist-Drehzahl $N_i$ repräsentierenden Signal $S_{KS}$ des Kurbelwellensensors KS die Zeitdauer n·T einer Störperiode P und dient somit als Taktgeber für den Periodenspeicher PS.

Nach einer Einschwingzeit von beispielsweise zwei Störperioden P wird mittels der lernenden Störgrößenaufschaltung SA eine Drehmomentungleichförmigkeit oder -welligkeit aktiv bedämpft. Das beschriebene Verfahren und die beschriebene Vorrichtung eignen sich daher ihsbesondere zur Kompensation periodischer zeitvarianter Drehzahlungleichförmigkeiten. Diese Art der Schwingungsdämpfung kann daher sinnvoll in Verbindung mit dem bewährten Torsionsschwingungsdämpfer TF einer Kupplung, mit einem Zwei-Massen-Schwungrad, mit einem drehzahladaptiven Schwingungstilger oder mit einem Drehmomentwandler eingesetzt werden.

**Patentansprüche**

1. Verfahren zur Dämpfung von Drehschwingungen einer Verbrennungsmaschine (VM), bei dem einem von dieser erzeugten Störmoment ($M_z$) ein von einem Starter-Generator (SG) erzeugtes Gegenmoment ($M_{SG}$) überlagert wird,
**dadurch gekennzeichnet, dass** die Drehschwingungen nach dem Prinzip der lernenden Störgrößenaufschaltung kompensiert werden,

- wobei aus einer Ungleichförmigkeit der erfassten Ist-Drehzahl ($N_i$) der Verbrennungsmaschine (VM) anhand einer zu einer Übertragungsfunktion ($H_I(z)$) einer durch das Trägheitsmoment (J) der Verbrennungsmaschine (VM) und des Starter-Generators (SG) gebildeten Regelstrecke (TS2) inversen Übertragungsfunktion ($H_D(z)$) im Rückkopplungszweig (RZ) der Regelstrecke (TS2) eine das Störmoment ($M_z$) repräsentierende Drehmoment-Störgröße ($M_z$*) abgeleitet wird,

- wobei die Störgröße ($M_z$*) über mindestens zwei aufeinanderfolgende Störperioden (P) in einem Periodenspeicher (PS) hinterlegt wird,
- wobei aus dem um jeweils mindestens eine Störperiode (P) versetzt ausgelesenen Speicherinhalt des Periodenspeichers (PS) ein Soll-Gegenmoment ($M_s$) generiert wird, und
- wobei das Soll-Gegenmoment ($M_s$) einer Regelung (FR) des Starter-Generators (SG) zur Erzeugung des das Störmoment ($M_z$) kompensierenden Gegenmomentes ($M_{SG}$) zugeführt wird.

2. Verfahren nach Anspruch 1, **dadurch gekennzeichnet, dass** die Ist-Drehzahl ($N_i$) in diskreten Abtastwerten (IW) erfasst wird,

- wobei anhand einer Abweichung des Zeitabstands ($\Delta t$) der diskreten Abtastwerten (IW) bei der Ist-Drehzahl ($N_i$) gegenüber dem Zeitabstand ($\Delta t$) bei einer mittleren oder Soll-Drehzahl ($N_s$) mittels der inversen Übertragungsfunktion ($H_D(z)$) aus einer Ungleichförmigkeit der Drehzahl ($N_i$) diskrete Störgrößenwerte (SW) einer Störperiode (P) der entsprechenden Störgröße ($M_z$*) ermittelt und im Periodenspeicher (PS) bereits abgelegten Störgrößenwerten (SW) hinzuaddiert werden, und
- wobei die Störgrößenwerte (SW) einer früheren Störperiode (P) der Regelung (FR) des Starter-Generators (SG) als Soll-Gegenmoment ($M_s$) zugeführt werden.

3. Verfahren nach Anspruch 1 oder 2, **dadurch gekennzeichnet, dass** der im Periodenspeicher (PS) hinterlegte Störsignalverlauf durch Summenbildung mit nachfolgenden Störsignalperioden (P) solange verändert wird, bis das vom Periodenspeicher (PS) generierte Soll-Gegenmoment ($M_s$) dem zu diesem gegensinnigen Störmoment ($M_z$) gleich ist.

4. Verfahren nach einem der Ansprüche 1 bis 3, **dadurch gekennzeichnet, dass** das vom Periodenspeicher (PS) erzeugte Soll-Gegenmoment ($M_s$) um einen Faktor a, mit 0 < a < 1, abgeschwächt dem Starter-Generator (SG) zugeführt wird.

5. Vorrichtung zur Dämpfung von Drehschwingungen einer Verbrennungsmaschine (VM) mit einem dieser auf einer Kurbelwelle (KW) nachgeordneten Starter-Generator (SG) zur Erzeugung eines ein Störmoment ($M_z$) kompensierenden Gegenmomentes ($M_{SG}$), und mit einem Sensor (KS) zur Erfassung der Ist-Drehzahl ($N_i$) der Verbrennungsmaschine (VM),
**gekennzeichnet durch** einen nach dem Prinzip der lernenden Störgrößenaufschaltung arbeitenden Regelalgorithmus, der mittels einer Übertragungsfunktion ($H_I(z)$) einer **durch** das Trägheitsmoment (J) der Verbrennungsmaschine (VM) und des Starter-Generators (SG) gebildeten Regelstrecke (TS2) die Ist-Drehzahl (N) abbildet und daraus mittels der inversen Übertragungsfunktion ($H_D(z)$) im Rückkopplungszweig (RZ) der Regelstrecke (TS2) eine Drehmoment-Störgröße ($M_z$*) ableitet, wobei ein im Rückkopplungszweig (RZ) vorgesehener Periodenspeicher (PS) eine Anzahl von Störgrößenwerten (SW) der Drehmoment-Störgröße ($M_z$*) aufsummiert und anhand der über mindestens zwei aufeinanderfolgende Störperioden (P) aufsummierten Störgrößenwerte (SW) ein Soll-Gegenmoment ($M_s$) für eine Regelung (FR) des das Gegenmoment ($M_{SG}$) erzeugenden Starter-Generators (SG) ermittelt.

6. Vorrichtung nach Anspruch 5, **gekennzeichnet durch** einen Drehzahlregler (NR), der anhand einer Soll-Drehzahl ($N_s$) und der erfassten Ist-Drehzahl ($N_i$) ein zusammen mit dem Störmoment ($M_z$) und dem Drehmoment ($M_{SG}$) des Starter-Generators (SG) ein Summenmoment ($\Delta M$) bildendes Drehmoment ($M_{VM}$) des Verbrennungsmotors (VM) einstellt.

7. Vorrichtung nach Anspruch 5 oder 6, **dadurch gekennzeichnet, dass** der Sensor (KW) ein die Ist-Drehzahl ($N_i$) der Kurbelwelle (KW) repräsentierendes Abtastsignal ($S_{KS}$) mit einer Anzahl von Abtastwerten (IW) erzeugt, wobei mittels der inversen Übertragungsfunktion ($H_D(z)$) aus der Abtastzeit ($\Delta t$) aufeinanderfolgender Abtastwerte (IW) die Drehmoment-Störgröße ($M_z$*) abgeleitet ist.

8. Vorrichtung nach einem der Ansprüche 5 bis 7, **dadurch gekennzeichnet, dass** die Drehmoment-Störgröße ($M_z$*) die in einem Vergleichspunkt (VP2) gebildete Differenz aus einem ermittelten Summenmoment ($\Delta M$*) und dem vom Verbrennungsmotor (VM) erzeugten inneren Drehmoment ($M_{VM}$) ist.

9. Vorrichtung nach einem der Ansprüche 5 bis 8, **dadurch gekennzeichnet, dass** die Übertragungsfunktion ($H_I(z)$) die Charakteristik eines Intergriergliedes gemäß der Beziehung

$$H_I(z) = \frac{z}{z-1}$$

aufweist, und dass die inverse Übertragungsfunktion ($H_D(z)$) die Charakteristik eines Differenzierglieds gemäß der Beziehung

$$H_D(z) = \frac{z-1}{z}$$

aufweist.

10. Vorrichtung nach einem der Ansprüche 5 bis 9, **dadurch gekennzeichnet, dass** der Periodenspeicher (PS) die Charakteristik eines Summierers gemäß der Beziehung

$$P(z) = a \cdot \frac{1}{z^n - 1}$$

aufweist, wobei a ein Abschwächungsfaktor mit $0 < a < 1$ und $z^n$ ein Verzögerungsglied für eine Störperiode P ist.

11. Vorrichtung nach einem der Ansprüche 5 bis 10, **dadurch gekennzeichnet, dass** der feldorientiert geregelte Starter-Generator (SG) die Charakteristik eines Verzögerungsgliedes erster Ordnung gemäß der Beziehung

$$H_V(z) = b \cdot \frac{z}{z+c}$$

aufweist, wobei b und c, mit $-1 < c < 0$, Parameter des Starter-Generators (SG) sind.

## Claims

1. Method for damping torsional oscillations in an internal combustion engine (VM), in which a load moment ($M_{SG}$) generated by a starter generator (SG) is superimposed on a disturbance moment ($M_Z$) generated by this engine, **characterised in that** the torsional oscillations are compensated for according to the principle of adaptive disturbance variable compensation,

   - in which a torque disturbance variable ($M_Z^*$) representing the disturbance moment ($M_Z$) is derived from an irregularity of the recorded actual speed ($N_i$) of the internal combustion engine (VM) using a transfer function ($H_D(z)$) in the feedback branch (RZ) of the controlled system (TS2), which is the inverse of a transfer function ($H_I(z)$) of a controlled system (TS2) formed by the moment of inertia (J) of the internal combustion engine (VM) and the starter generator (SG),

   - in which the disturbance variable ($M_Z^*$) is stored over at least two consecutive disturbance periods (P) in a period memory (PS),

   - in which a target load moment ($M_s$) is generated from the read-off memory content of the period memory (PS) in each instance at an interval of at least one disturbance period (P), and

   - in which the target load moment ($M_s$) is fed to a control unit (FR) of the starter generator (SG) to generate the load moment ($M_{SG}$) compensating for the disturbance moment ($M_Z$).

2. Method according to Claim 1, **characterised in that** the actual speed ($N_i$) is recorded in discrete scan values (IW),

   - in which discrete disturbance variable values (SW) of a disturbance period (P) of the corresponding disturbance variable ($M_Z^*$) are determined and added to disturbance variable values (SW) already stored in the period memory (PS) using the difference between the time interval ($\Delta t$) of the discrete scan values (IW) at the actual speed ($N_i$) and the time interval ($\Delta t$) at a mean or target speed ($N_s$) by means of the inverse transfer function ($H_D(z)$) from an irregularity in the speed ($N_i$), and

- in which the disturbance variable values (SW) of an earlier disturbance period (P) are fed to the control unit (FR) of the starter generator (SG) as the target load moment ($M_s$).

3. Method according to Claim 1 or 2, **characterised in that** the disturbance signal pattern stored in the period memory (PS) is changed by means of summation with subsequent disturbance signal periods (P) until the target load moment ($M_s$) generated by the period memory (PS) is equal to this opposing disturbance moment ($M_z$).

4. Method according to one of Claims 1 to 3, **characterised in that** the target load moment ($M_s$) generated by the period memory (PS) is fed to the starter generator (SG) reduced by a factor a, where $0 < a < 1$.

5. Device for damping torsional oscillations in an internal combustion engine (VM) with a starter generator (SG) downstream of this on a crankshaft (KW) to generate a load moment ($M_{SG}$) compensating for a disturbance moment ($M_z$) and with a sensor (KS) to detect the actual speed ($N_i$) of the internal combustion engine (VM), **characterised by** a control algorithm operating in accordance with the principle of adaptive disturbance variable compensation, which maps the actual speed (N) by means of a transfer function ($H_I(z)$) of a controlled system (TS2) formed by the moment of inertia (J) of the internal combustion engine (VM) and the starter generator (SG) and derives a torque disturbance variable ($M_z^*$) from this using the inverse transfer: function ($H_D(z)$) in the feedback branch (RZ) of the controlled system (TS2), with a period memory (PS) in the feedback branch (RZ) adding up a number of disturbance variable values (SW) for the torque disturbance variable ($M_z^*$) and using the disturbance variable values (SW) added up over at least two consecutive disturbance periods (P) to determine a target load moment ($M_s$) for a control unit (FR) of the starter generator (SG) generating the load moment ($M_{SG}$).

6. Device according to Claim 5, **characterised by** a speed regulator (NR), which uses a target speed ($N_s$) and the recorded actual speed ($N_i$) to set a torque ($M_{VM}$) for the internal combustion engine (VM), which together with the disturbance moment ($M_z$) and the torque ($M_{SG}$) of the starter generator (SG) forms a cumulative moment ($\Delta M$).

7. Device according to Claim 5 or 6, **characterised in that** the sensor (KW) generates a scan signal ($S_{KS}$) representing the actual speed ($N_i$) of the crankshaft (KW) with a number of scan values (IW), with the torque disturbance variable ($M_z^*$) being derived by means of the inverse transfer function ($H_D(z)$) from the scan time ($\Delta t$) of consecutive scan values (IW).

8. Device according to one of Claims 5 to 7, **characterised in that** the torque disturbance variable ($M_z^*$) is the difference established in a comparison point (VP2) between a determined cumulative moment ($\Delta M^*$) and the internal torque ($M_{VM}$) generated by the internal combustion engine (VM).

9. Device according to one of Claims 5 to 8, **characterised in that** the transfer function ($H_I(z)$) has the characteristic of an integrator according to the equation

$$H_I(z) = \frac{z}{z-1}$$

and that the inverse transfer function ($H_D(z)$) has the characteristic of a differentiator according to the equation

$$H_D(z) = \frac{z-1}{z}$$

10. Device according to one of Claims 5 to 9, **characterised in that** the period memory (PS) has the characteristic of an accumulator according to the equation

$$P(z) = a \cdot \frac{1}{z^n - 1}$$

with a as a reduction factor where $0 < a < 1$ and $z^n$ a delay element for a disturbance period P.

11. Device according to one of Claims 5 to 10, **characterised in that** the starter generator (SG) controlled on a field basis has the characteristic of a first-order delay element according to the equation

$$H_V(z) = b \cdot \frac{z}{z + c}$$

with b and c as parameters of the starter generator (SG) where -1 < c < 0.

**Revendications**

1. Procédé pour l'amortissement des oscillations de rotation d'une machine à combustion interne (VM), dans lequel on superpose à un moment perturbateur ($M_z$) produit par cette dernière un couple antagoniste produit par un démarreur-génératrice ($M_{SG}$),
   **caractérisé en ce que** les oscillations de rotation sont compensées en appliquant le principe de l'introduction des grandeurs perturbatrices avec apprentissage,

   - dans lequel, à partir d'une irrégularité captée de la vitesse de rotation réelle ($N_i$) de la machine à combustion interne (VM) sur la base d'une fonction de transfert ($H_D(z)$) inverse d'une fonction de transfert ($H_l(z)$) d'un système asservi (TS2) formé du moment d'inertie (J) de la machine à combustion interne (VM) et du démarreur génératrice (SG), on dérive, dans la branche d'asservissement (RZ) du système asservi (TS2), une grandeur perturbatrice de couple ($M_z$*) qui représente le moment perturbateur ($M_z$),
   - la grandeur perturbatrice ($M_z$*) est enregistrée dans une mémoire de périodes (PS) pendant au moins deux périodes de pertubation (P) consécutives,
   - on génère à partir du contenu de mémoire de la mémoire de périodes (PS) lu, décalé à chaque fois d'au moins une période de perturbation, un moment antagoniste de consigne ($M_s$), et
   - le moment antagoniste de consigne ($M_s$) est transmis à une régulation (FR) du démarreur-génératrice (SG) afin de produire le moment antagoniste ($M_{SG}$) compensant le moment perturbateur ($M_z$).

2. Procédé selon la revendication 1, **caractérisé en ce que** la vitesse de rotation réelle ($N_i$) et mesurée par des valeurs d'échantillonnage discrètes (IW),

   - dans lequel, sur la base d'un écart entre l'intervalle de temps ($\Delta t$) des valeurs d'échantillonnage discrètes (IW) à la vitesse de rotation réelle ($N_i$) et l'intervalle de temps ($\Delta t$) à une vitesse de rotation moyenne ou de consigne ($N_s$), au moyen de la fonction de transfert inverse ($H_D(z)$), on obtient à partir d'une irrégularité de la vitesse de rotation ($N_i$), des valeurs discrètes de grandeurs perturbatrices (SW) d'une période de perturbation (P) de la grandeur perturbatrice correspondante ($M_z$*) et on les ajoute à des valeurs de grandeurs perturbatrices (SW) déjà enregistrées dans la mémoire de périodes (PS), et
   - dans lequel les valeurs de grandeurs perturbatrices (SW) d'une période perturbation (P) précédente sont envoyées à la régulation (FR) du démarreur-génératrice (SG) en tant que moment antagoniste de consigne ($M_s$).

3. Procédé selon la revendication 1 ou 2, **caractérisé en ce que** le profil du signal perturbateur enregistré dans la mémoire de périodes (PS) est modifié par une formation de somme avec des périodes de signaux perturbateurs (P) suivantes jusqu'à ce que le moment antagoniste de consigne ($M_s$) généré par la mémoire de périodes (PS) soit égal au moment perturbateur ($M_z$) de sens opposé.

4. Procédé selon une des revendications 1 à 3, **caractérisé en ce que** le moment antagoniste de consigne ($M_s$) produit par la mémoire de périodes (PS) est transmis au démarreur-génératrice (SG), pondéré d'un facteur $\underline{a}$, avec 0 < a < 1.

5. Dispositif pour l'amortissement d'oscillations de rotation d'une machine à combustion interne (VM), comprenant un démarreur-génératrice (SG) placé en aval de celle-ci sur un vilebrequin (KW) et destiné à produire un moment antagoniste ($M_{SG}$) compensant un moment perturbateur ($M_z$) et un capteur (KS) destiné à capter la vitesse de rotation réelle ($N_i$) de la machine à combustion interne (VM),
   **caractérisé par** un algorithme de régulation opérant selon le principe de l'introduction des grandeurs perturbatrices avec apprentissage qui, au moyen d'une fonction de transfert ($H_r(z)$) d'un système asservi (TS2) formé par le moment d'inertie (J) de la machine à combustion interne (VM) et du démarreur-génératrice (SG), représente la vitesse de rotation réelle (N) et, de là, dérive au moyen de la fonction de transfert inverse ($H_D(z)$), dans la branche d'asservissement (RZ) du système asservi (TS2), une grandeur perturbatrice de couple ($M_z$*), cependant qu'une mémoire de périodes (PS) prévue dans la branche d'asservissement (RZ) additionne un certain nombre de valeurs de grandeurs perturbatrices (SW) de la grandeur perturbatrice de couple ($M_z$\*) et, sur la base des valeurs de grandeurs perturbatrices (SW) additionnées sur au moins deux périodes de perturbation consécutives, obtient un moment antagoniste de consigne ($M_s$) pour une régulation (FR) du démarreur-génératrice (SG) qui produit le moment antagoniste ($M_{SG}$).

6. Dispositif selon la revendication 5, **caractérisé par** un régulateur de vitesse de rotation (NR) qui, sur la base d'une vitesse de rotation de consigne ($N_s$) et de la vitesse de rotation réelle ($N_i$) mesurée, règle un couple ($M_{VM}$) du moteur à combustion interne (VM) qui, ensemble avec le moment perturbateur ($M_z$) et avec le couple ($M_{SG}$), forme un moment somme ($\Delta M$) du démarreur-génératrice (SG).

7. Dispositif selon la revendication 5 ou 6, **caractérisé en ce que** le capteur (KW) produit un signal d'échantillonnage ($S_{KS}$) représentant la vitesse de rotation réelle ($N_i$) du vilebrequin (KW) avec un certain nombre de valeurs d'échantillonnage, cependant qu'au moyen de la fonction de transfert inverse ($H_D$ (z)), la grandeur perturbatrice de couple ($M_z$\*) est dérivée du temps d'échantillonnage ($\Delta t$) entre des valeurs d'échantillonnage (IW) consécutives.

8. Dispositif selon une des revendications 5 à 7, **caractérisé en ce que** la grandeur perturbatrice de couple ($M_z$\*) est la différence, formée dans un point de comparaison (VP2), entre un moment somme ($\Delta M$\*) obtenu et le couple interne ($M_{VM}$) produit par le moteur à combustion interne (VM).

9. Dispositif selon une des revendications 5 à 8, **caractérisé en ce que** la fonction de transfert ($H_I(z)$) possède la caractéristique d'un élément intégrateur selon la relation

$$H_I(z) = \frac{z}{z-1}$$

et **en ce que** la fonction de transfert inverse ($H_D(z)$) possède la caractéristique d'un élément différentiateur selon la relation

$$H_D(z) = \frac{z-1}{z}.$$

10. Dispositif selon une des revendications 5 à 9, **caractérisé en ce que** la mémoire de périodes (PS) possède la caractéristique d'un additionneur selon la relation

$$P(z) = a . \frac{1}{z^n - 1}$$

où $\underline{a}$ est un facteur d'affaiblissement avec $0 < a < 1$ et $z^n$ est un élément de temporisation pour une période de perturbation P.

11. Dispositif selon une des revendications 5 à 10, **caractérisé en ce que** le démarreur-génératrice (SG) réglé agissant sur le champ possède la caractéristique d'un élément de temporisation du premier ordre selon la relation

$$H_V(z) = b . \frac{z}{z+c}$$

où b et c sont des paramètres du démarreur-génératrice, avec $-1 < c < 0$.

EP 1 203 270 B1

14

**FIG 1**

**FIG 2**

EP 1 203 270 B1

FIG 3

EP 1 203 270 B1

FIG 4

17